# EUROPÄISCHE PATENTANMELDUNG

(11) **EP 4 481 956 A1**
(43) Veröffentlichungstag der Anmeldung: **25.12.2024**
(21) Anmeldenummer: 24176020.6
(22) Anmeldetag: 15.05.2024
(51) Int. Cl.: H01R 13/46, H01R 13/629, H01R 13/641, H01R 43/26

(54) **SICHERUNGSVORRICHTUNG MIT EINEM IN SICHTFELDERN SICHTBAREN ERKENNUNGSMERKMAL**

(30) Priorität: 06.06.2023 DE 102023114788
(71) Anmelder: Lisa Dräxlmaier GmbH, 84137 Vilsbiburg (DE)
(72) Erfinder: Neumayer, Franziska, 84144 Geisenhausen (DE); Wimmer, Stefan, 84098 Hohenthann (DE); Wilhelm, Sebastian, 66625 Nohfelden (DE)

(57) **Zusammenfassung**

Die Offenbarung betrifft eine Sicherungsvorrichtung (100) zur Sicherung einer Verriegelung eines Verriegelungselements (110), wobei die Sicherungsvorrichtung (100) Folgendes umfasst: ein Verriegelungselement (110), das von einer ersten Verriegelungsstellung (111) in eine zweite Verriegelungsstellung (112) bewegbar ist, wobei das Verriegelungselement (110) in der zweiten Verriegelungsstellung (112) eine Verriegelung bewirkt; ein Anzeigeelement (120) mit einem Erkennungsmerkmal (200) zum Anzeigen einer Information; wobei in der ersten Verriegelungsstellung (111) des Verriegelungselements (110) das Erkennungsmerkmal (200) innerhalb eines ersten Sichtfelds (212) sichtbar ist; und wobei in der zweiten Verriegelungsstellung (112) des Verriegelungselements (110) das Erkennungsmerkmal (200) innerhalb eines zweiten Sichtfelds (214) sichtbar ist.

## Beschreibung

### Technisches Gebiet

Die vorliegende Erfindung betrifft eine Sicherungsvorrichtung mit einem Erkennungsmerkmal, das in einem ersten Sichtfeld und in einem zweiten Sichtfeld sichtbar ist. Die Sicherungsvorrichtung dient zur Sicherung einer Verriegelung eines Verriegelungselements bzw. zur "Steckerpositions-Kontrolle" oder "Connector Position Assurance (CPA)" und ist zur Sicherung einer Verriegelung eines Steckergehäuses an einem Gegen-Steckergehäuse einsetzbar. Insbesondere betrifft die Erfindung eine CPA mit einem Erkennungsmerkmal, bei dem die Leserichtung gesteuert wird. Das Erkennungsmerkmal kann ein Code sein, zum Beispiel ein DMC (Data Matrix Code).

### Stand der Technik

CPAs ("Connector Position Assurance") sollen verhindern, dass sich ein an einem Gegen-Steckergehäuse verrastetes Steckergehäuse unbeabsichtigt von dem Gegen-Steckergehäuse löst, was beispielsweise aufgrund von Vibrationen, temperaturbedingter Ausdehnung oder Schrumpfung, das Ziehen an einem im Steckergehäuse untergebrachten Kabel oder andere mechanische Einwirkungen passieren kann. Die CPA ist dafür zuständig als letztes zu bedienendes Element den Stecker mit seinem Gegenstück zu verriegeln. Um hier ein sicheres Verriegeln zu gewährleisten, wird gefordert, dass der finale Zustand der Verriegelung durch ein scanbares Element erfasst wird und dieses Element nur lesbar sein darf, wenn die CPA final geschlossen ist.

### Beschreibung der Erfindung

Eine Aufgabe der Erfindung ist es daher, eine geeignete Vorrichtung zu schaffen, mit der zuverlässig erkannt werden kann, ob eine Verriegelung vorliegt oder nicht, insbesondere für Stecker, bei denen eine CPA-Verriegelung erforderlich ist.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Durch die Anforderung, dass der Stecker einen hohen Automatisierungsgrad in Herstellung und Konfektionierung benötigt, ist die Verwendung eines scanbaren Elementes zwingend notwendig als Kontrollfunktion. Die hier vorgestellte Erfindung betrifft eine Sicherungsvorrichtung umfassend ein Anzeigeelement mit einem Erkennungsmerkmal, das je nach Verriegelungszustand des Verriegelungselements in einem ersten Sichtfeld oder in einem zweiten Sichtfeld sichtbar ist. Ein Leseelement, das innerhalb des zweiten Sichtfelds und außerhalb des ersten Sichtfelds positioniert ist, kann damit zuverlässig eine Verriegelung des Verriegelungselements anzeigen, denn nur in dem zweiten Sichtfeld ist die Information, welche das Anzeigeelement anzeigt, erkennbar. Das Erkennungsmerkmal ist dabei in beiden Verriegelungsstellungen nicht verdeckt und bleibt stets sichtbar. Das Anzeigeelement kann damit als scanbares Element genutzt werden, um eine zuverlässige Kontrolle der Stecker-Montage zu gewährleisten und ein Scannen des Stecksystems im zusammengebauten Zustand zu ermöglichen. Die hier vorgestellte Lösung kann auf verschiedene Stecksysteme angewendet werden und lässt sich leicht von einem Stecksystem auf ein anderes Stecksystem adaptieren.

Grundprinzip einer Ausführungsform der Erfindung ist die Steuerung der Leserichtung eines scanbaren Elementes (Fortlaufend als DMC bezeichnet). Der DMC ist so positioniert, dass er zwar sichtbar ist, allerdings nur aus einem bestimmten Winkel, daher ist er nicht verdeckt. Er ist lediglich in einer ungünstigen Position und daher nicht von oben erkennbar. Durch Betätigen der CPA wird die Leserichtung erhöht und der DMC ist aus verschiedenen Winkeln erkennbar.

Hauptmerkmal dieser Ausführungsform ist die Steuerung der Erfassbarkeit durch Manipulation der Leserichtung. Der DMC ist nur aus einer ersten Stellung und nur aus einer bestimmten Richtung erkennbar. In einer zweiten Stellung ist er aus einer anderen Richtung erkennbar.

Gemäß einem ersten Aspekt wird die oben beschriebene Aufgabe gelöst durch eine Sicherungsvorrichtung zur Sicherung einer Verriegelung eines Verriegelungselements, wobei die Sicherungsvorrichtung Folgendes umfasst: ein Verriegelungselement, das von einer ersten Verriegelungsstellung in eine zweite Verriegelungsstellung bewegbar ist, wobei das Verriegelungselement in der zweiten Verriegelungsstellung eine Verriegelung bewirkt; ein Anzeigeelement mit einem Erkennungsmerkmal zum Anzeigen einer Information; wobei in der ersten Verriegelungsstellung des Verriegelungselements das Erkennungsmerkmal innerhalb eines ersten Sichtfelds sichtbar ist; und wobei in der zweiten Verriegelungsstellung des Verriegelungselements das Erkennungsmerkmal innerhalb eines zweiten Sichtfelds sichtbar ist.

Die Information kann eine beliebige Information darstellen. Insbesondere handelt es sich dabei um eine Information betreffend eine Verriegelung oder Nicht-Verriegelung durch das Verriegelungselement. Zusätzlich kann die Information noch weiteres enthalten, zum Beispiel Anwenderinformation, Seriennummer der Sicherungsvorrichtung oder einzelner Komponenten der Vorrichtung, Instruktionen an den Nutzer, etc.

Eine solche Sicherungsvorrichtung bietet den technischen Vorteil, dass ein sicheres und zuverlässiges Erkennen einer Verriegelung möglich ist. Das Anzeigeelement mit dem Erkennungsmerkmal lässt sich über ein Erfassungselement, zum Beispiel ein Leseelement oder ein scanbares Element erfassen, das im zweiten Sichtfeld angeordnet ist, beispielweise oberhalb des Anzeigeelements, so dass eine zuverlässige automatische Erkennung der Information und damit einer Stellung des Verriegelungselements möglich ist. Damit lässt sich insbesondere eine automatische Erfassung des Zustands von Steckern, bei denen eine CPA-Verriegelung erforderlich ist, durchführen. Die Sicherungsvorrichtung erfüllt somit die Anforderungen, die an eine CPA-Verriegelung gestellt werden.

Das Erkennungsmerkmal kann beispielsweise ein Code sein, zum Beispiel ein ein-oder mehrdimensionaler Code, oder ein Piktogramm oder ein Zeichen.

Das zweite Sichtfeld kann hier ein Sichtfeld sein, innerhalb dessen ein Erfassungselement positioniert ist, das ausgebildet ist, das Erkennungsmerkmal zu erfassen bzw. zu erkennen.

Das zweite Sichtfeld kann beispielsweise einen größeren Sichtbereich umfassen als das erste Sichtfeld.

Gemäß einer beispielhaften Ausführungsform der Sicherungsvorrichtung ist das Erkennungsmerkmal in beiden Verriegelungsstellungen des Verriegelungselements nicht verdeckt und bleibt stets sichtbar.

Dies bietet den technischen Vorteil, dass keine Abdeckung des Anzeigeelements mit dem Erkennungsmerkmal notwendig ist, um den gewünschten Effekt der Nicht-Erkennbarkeit zu erzielen. Die Veränderung des Sichtbereichs von einem ersten Sichtfeld zu einem zweiten Sichtfeld reicht bereits aus, um das Erkennungsmerkmal unkenntlich zu machen, so dass es von einem Erkennungselement, zum Beispiel einem Leseelement oder einem scanbaren Element, das in einer bestimmten Stellung gegenüber dem Anzeigeelement angebracht ist, nicht erfassbar bzw. erkennbar ist. Das Erkennungselement bzw. scanbare Element kann dann die Information nur in der zweiten Verriegelungsstellung erfassen, nicht aber in der ersten Verriegelungsstellung.

Gemäß einer beispielhaften Ausführungsform der Sicherungsvorrichtung umfassen das erste Sichtfeld und das zweite Sichtfeld unterschiedliche Sichtbereiche.

Damit kann sichergestellt werden, dass in einer vorgegebenen Anordnung des Erkennungselements bzw. Leseelements oder scanbaren Elements die Information nur erfassbar ist, wenn sich das Verriegelungselement in der zweiten Verriegelungsstellung befindet, also eine Verriegelung vorliegt.

Gemäß einer beispielhaften Ausführungsform der Sicherungsvorrichtung umfasst die Sicherungsvorrichtung ein Manipulationselement, das ausgebildet ist, beim Bewegen des Verriegelungselements von der ersten Verriegelungsstellung in die zweite Verriegelungsstellung das erste Sichtfeld in das zweite Sichtfeld zu überführen.

Dies bietet den technischen Vorteil, dass über ein einfaches Manipulationselement die beiden Sichtfelder ineinander überführt werden können. Das Manipulationselement ist mit dem Verriegelungselement mechanisch gekoppelt und führt abhängig von der Bewegung des Verriegelungselements eine Überführung des ersten in das zweite Sichtfeld oder umgekehrt aus.

Gemäß einer beispielhaften Ausführungsform der Sicherungsvorrichtung ist das Manipulationselement ausgebildet ist, beim Bewegen des Verriegelungselements von der ersten Verriegelungsstellung in die zweite Verriegelungsstellung eine Leserichtung zu verändern, in der das Erkennungsmerkmal erkennbar ist.

Dies bietet den technischen Vorteil, dass über die Veränderung der Leserichtung vorgegeben werden kann, an welcher Position ein Erkennungselement, zum Beispiel ein Leseelement, platziert sein muss, damit es in der zweiten Verriegelungsstellung, das heißt beim Vorliegen einer Verriegelung, die Information des Erkennungsmerkmals auf dem Anzeigeelement erkennen bzw. lesen kann und in der ersten Verriegelungsstellung die Information nicht erkennen kann.

Gemäß einer beispielhaften Ausführungsform der Sicherungsvorrichtung umfasst das Anzeigeelement eine Anzeigeebene, und ist ausgebildet, das Erkennungsmerkmal auf der Anzeigeebene darzustellen; wobei das Erkennungsmerkmal in der ersten Verriegelungsstellung innerhalb eines ersten Bereichs von Lesewinkeln bezüglich der Anzeigeebene erkennbar ist; und wobei der erste Bereich von Lesewinkeln keinen rechten Winkel bezüglich der Anzeigeebene umfasst.

Dies bietet den technischen Vorteil, dass das Erkennungsmerkmal in der ersten Verriegelungsstellung nicht von oben, das heißt senkrecht zur Anzeigeebene, erkennbar ist, da der erste Bereich von Lesewinkeln keinen rechten Winkel umfasst.

Es versteht sich, dass der erste Bereich von Lesewinkeln nicht nur keinen exakt rechtwinkligen Winkel umfasst, das heißt einen Winkel von 90° zur Anzeigeebene, sondern auch keine Winkel, die annähernd rechtwinklig sind, beispielsweise Lesewinkel im Bereich von 89° bis 91 ° oder im Bereich von 88° bis 92° oder im Bereich von 85° bis 95° oder im Bereich von 80° bis 100° oder im Bereich von 70° bis 110° oder auch einen Bereich von Lesewinkeln der nicht symmetrisch um 90° angeordnet ist.

Gemäß einer beispielhaften Ausführungsform der Sicherungsvorrichtung ist das Erkennungsmerkmal in der zweiten Verriegelungsstellung innerhalb eines zweiten Bereichs von Lesewinkeln bezüglich der Anzeigeebene erkennbar; wobei der zweite Bereich von Lesewinkeln einen rechten Winkel bezüglich der Anzeigeebene umfasst.

Dies bietet den technischen Vorteil, dass das Erkennungsmerkmal in der zweiten Verriegelungsstellung oben, das heißt senkrecht zur Anzeigeebene, erkennbar ist, da der zweite Bereich von Lesewinkeln einen rechten Winkel umfasst.

Gemäß einer beispielhaften Ausführungsform der Sicherungsvorrichtung umfassen der erste Bereich von Lesewinkeln und der zweite Bereich von Lesewinkeln keine gemeinsamen Winkel.

Damit wird der technische Vorteil erreicht, dass eine eindeutige räumliche Unterscheidbarkeit zwischen der ersten Verriegelungsstellung und der zweiten Verriegelungsstellung vorliegt. Ein Erkennungselement, das in einer räumlichen Position angeordnet ist, in dem es unter einem Lesewinkel aus dem zweiten Bereich von Lesewinkeln bezüglich der Anzeigeebene angeordnet ist, erkennt das Erkennungsmerkmal in der zweiten Verriegelungsstellung, nicht aber in der ersten Verriegelungsstellung.

Gemäß einer beispielhaften Ausführungsform der Sicherungsvorrichtung umfasst das Erkennungsmerkmal einen Code, der ausgebildet ist, die Information anzuzeigen; wobei der Code in der ersten Verriegelungsstellung innerhalb des ersten Sichtfelds erkennbar ist; und wobei der Code in der zweiten Verriegelungsstellung innerhalb des zweiten Sichtfelds erkennbar ist.

Dies bietet den technischen Vorteil, dass auf einfache Weise eine Unterscheidbarkeit anhand von Codes realisiert werden kann. Dafür geeignete Code, wie zum Beispiel 1D, 2D oder 3D-Codes weisen einen starken Kontrast auf, so dass sie von einem Erkennungselement erkannt werden können, das in dem ersten Sichtfeld oder in dem zweiten Sichtfeld angeordnet ist.

Beispielsweise kann es sich bei dem Code um einen ein-dimensionalen oder mehrdimensionalen Code handeln, beispielsweise um einen Data Matrix Code, DMC oder einen QR-Code oder einen Barcode.

Der Data Matrix Code ist einer der bekanntesten 2D-Codes und lässt sich für dauerhafte und robuste Direktbeschriftungen einsetzen. Der DMC ist in der Größe variabel und lässt somit eine Vielzahl von Symbol-Elementen zu. Auch QR-Codes und Barcodes eignen sich gut als Erkennungsmerkmal.

Gemäß einer beispielhaften Ausführungsform der Sicherungsvorrichtung ist die Sicherungsvorrichtung ausgebildet, eine Steckerpositions-Sicherung (CPA) zur Sicherung einer Verriegelung eines Steckergehäuses an einem Gegen-Steckergehäuse vorzunehmen.

Dies bietet den technischen Vorteil, dass der Zustand der CPA sich sicher durch ein Erkennungselement bzw. scanbares Element erfassen lässt, welches nur dann lesbar ist, wenn die CPA final geschlossen ist.

Gemäß einer beispielhaften Ausführungsform der Sicherungsvorrichtung umfasst die Sicherungsvorrichtung ferner: ein Spannelement zum Einspannen des Steckergehäuses in das Gegen-Steckergehäuse, wobei das Spannelement von einer offenen Spannelementstellung, in der das Steckergehäuse in das Gegen-Steckergehäuse einführbar ist, in eine geschlossene Spannelementstellung, in der das Steckergehäuse elektrisch kontaktierend mit dem Gegen-Steckergehäuse fixiert ist, bewegbar ist; wobei das Verriegelungselement an dem Spannelement angebracht ist und ausgebildet ist, das Spannelement zu verriegeln oder zu entriegeln. Wie bereits oben beschrieben, zeigt das Anzeigeelement eine Information an, beispielsweise eine Information über eine Verriegelung des Spannelements durch das Verriegelungselement.

Dies bietet den technischen Vorteil, dass das Anzeigeelement zuverlässig eine Information anzeigt, beispielsweise eine Information betreffend die Verriegelung des Spannelements, beispielsweise eines Bügels, so dass der Zustand des Spannelements sich zuverlässig erkennen lässt, beispielsweise mit einem scanbaren Element. Wie oben bereits gesagt, kann es sich bei der Information auch um jede andere Art von Information handeln. Bei Erkennbarkeit der Information liegt eine Verriegelung vor.

Gemäß einer beispielhaften Ausführungsform der Sicherungsvorrichtung ist das Verriegelungselement in der geschlossenen Spannelementstellung von der ersten Verriegelungsstellung in die zweite Verriegelungsstellung bewegbar und ist ausgebildet, in der zweiten Verriegelungsstellung das Spannelement in der geschlossenen Spannelementstellung zu verriegeln, und in der ersten Verriegelungsstellung das Spannelement für eine Bewegung in die offene Spannelementstellung zu entriegeln.

Dies bietet den technischen Vorteil, dass ein sicheres Verbinden des Steckergehäuses mit dem Gegen-Steckergehäuse über das Spannelement gewährleistet ist. Die Sicherungsvorrichtung erfüllt somit die Anforderungen, die an eine CPA-Verriegelung gestellt werden.

Gemäß einer beispielhaften Ausführungsform der Sicherungsvorrichtung sind das Anzeigeelement und das Manipulationselement an dem Spannelement angebracht.

Dies bietet den technischen Vorteil, dass das Anzeigeelement sicher und robust eine Information, beispielsweise eine Information betreffend eine Verriegelung, anzeigen kann. Das Manipulationselement kann einfach konstruiert sein, um das erste Sichtfeld bei einer Bewegung des Verriegelungselements von der ersten Verriegelungsstellung in die zweite Verriegelungsstellung in das zweite Sichtfeld zu überführen und umgekehrt, da sowohl Verriegelungselement, Anzeigeelement und Manipulationselement an dem gleichen Bauteil, nämlich dem Spannelement angebracht sind.

Gemäß einem zweiten Aspekt wird die oben beschriebene Aufgabe gelöst durch eine Steckverbindung mit einem Steckergehäuse und einem Gegen-Steckergehäuse, die über eine Sicherungsvorrichtung gemäß dem ersten Aspekt miteinander verbunden und gesichert sind.

Gemäß einem dritten Aspekt wird die oben beschriebene Aufgabe gelöst durch ein Sicherungssystem umfassend eine Sicherungsvorrichtung gemäß dem ersten Aspekt und ein Lesegerät, wobei das Lesegerät ausgebildet ist, das Erkennungsmerkmal des Anzeigeelements zu erfassen, wenn sich das Verriegelungselement in der zweiten Verriegelungsstellung befindet, um eine Information zu erkennen, zum Beispiel eine Information über eine Verriegelung.

Gemäß einer beispielhaften Ausführungsform des Sicherungssystems ist das Lesegerät in dem zweiten Sichtfeld angeordnet und ausgebildet, das Erkennungsmerkmal des Anzeigeelements nur dann zu erfassen, wenn sich das Verriegelungselement in der zweiten Verriegelungsstellung befindet und nur in dieser Stellung eine korrekte Verriegelung zu erfassen.

Gemäß einem vierten Aspekt wird die oben beschriebene Aufgabe gelöst durch ein Verfahren zur Sicherung einer Verriegelung eines Verriegelungselements, wobei das Verfahren die folgenden Schritte umfasst: Bewegen eines Verriegelungselements von einer ersten Verriegelungsstellung in eine zweite Verriegelungsstellung, wobei das Verriegelungselement in der zweiten Verriegelungsstellung eine Verriegelung bewirkt; Anzeigen einer Information mit einem Anzeigeelement mit einem Erkennungsmerkmal; wobei in der ersten Verriegelungsstellung des Verriegelungselements das Erkennungsmerkmal innerhalb eines ersten Sichtfelds sichtbar ist; und wobei in der zweiten Verriegelungsstellung des Verriegelungselements das Erkennungsmerkmal innerhalb eines zweiten Sichtfelds sichtbar ist.

Ein solches Verfahren bietet die gleichen technischen Vorteile wie die oben beschriebene Sicherungsvorrichtung gemäß dem ersten Aspekt.

### Kurze Figurenbeschreibung

Im Folgenden wird die Erfindung anhand von Ausführungsbeispielen und den Figuren näher beschrieben. Es zeigen:
- Fig. 1: eine schematische Darstellung der Zustände einer erfindungsgemäßen Sicherungsvorrichtung 100;
- Fig. 2a: eine Darstellung einer erfindungsgemäßen Sicherungsvorrichtung 100 gemäß einer Ausführungsform in der ersten Verriegelungsstellung 111, in der das Erkennungsmerkmal 200 im zweiten Sichtfeld, hier von oben, nicht erkennbar ist;
- Fig. 2b: eine Darstellung der erfindungsgemäßen Sicherungsvorrichtung 100 aus Figur 2a in der zweiten Verriegelungsstellung 112, in der das Erkennungsmerkmal 200 im zweiten Sichtfeld, hier von oben, erkennbar ist;
- Fig. 3a: eine Schnittdarstellung der erfindungsgemäßen Sicherungsvorrichtung 100 gemäß einer Ausführungsform in der ersten Verriegelungsstellung 111, in der das Erkennungsmerkmal 200 im ersten Sichtfeld 212 erkennbar ist;
- Fig. 3b: eine Schnittdarstellung der erfindungsgemäßen Sicherungsvorrichtung 100 gemäß einer Ausführungsform in der zweiten Verriegelungsstellung 112, in der das Erkennungsmerkmal 200 im zweiten Sichtfeld 214 erkennbar ist;
- Fig. 4a: eine Schnittdarstellung der erfindungsgemäßen Sicherungsvorrichtung 100 gemäß einer Ausführungsform in der ersten Verriegelungsstellung 111 mit einem Lesewinkel von etwa 70°;
- Fig. 4b: eine räumliche Darstellung der erfindungsgemäßen Sicherungsvorrichtung 100 aus Figur 4a mit einem Blick auf das Erkennungsmerkmal parallel zur Leserichtung; und
- Fig. 5: eine 3D-Darstellung einer Sicherungsvorrichtung 100 umfassend ein Verriegelungselement 110, ein Anzeigeelement 120 mit Erkennungsmerkmal 200 und ein Spannelement 300 in geschlossener Spannbügelstellung, bei der sich das Verriegelungselement 110 in der zweiten Verriegelungsstellung 112 befindet.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

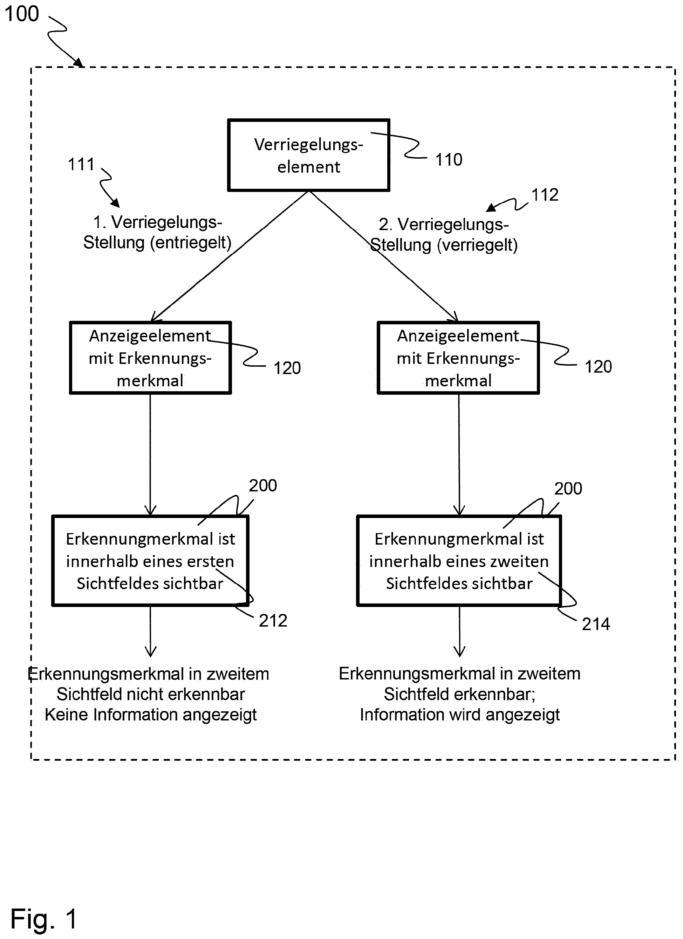

Fig. 1 zeigt eine schematische Darstellung der Zustände einer erfindungsgemäßen Sicherungsvorrichtung 100.

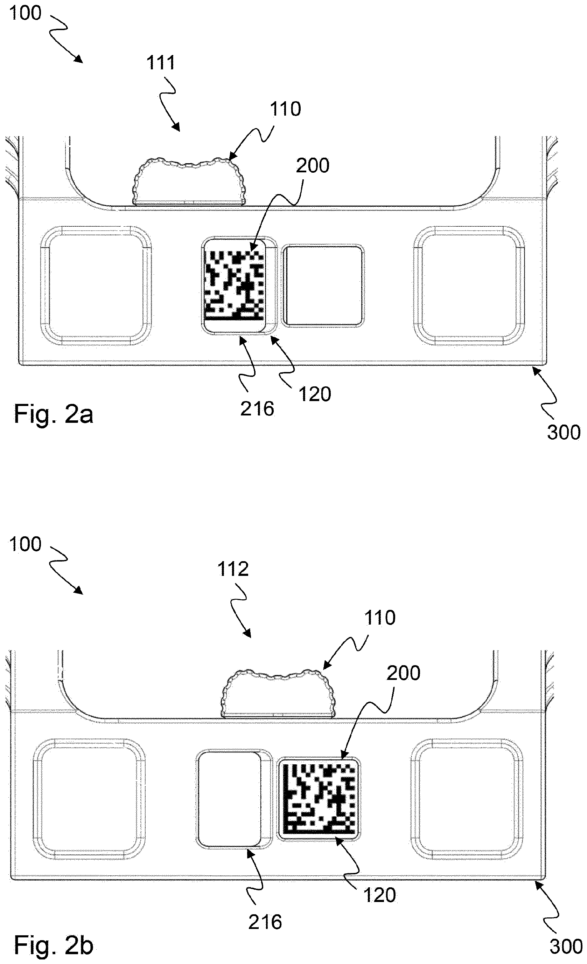

Die Sicherungsvorrichtung 100 dient zur Sicherung einer Verriegelung eines Verriegelungselements 110. Die Sicherungsvorrichtung 100 umfasst ein Verriegelungselement 110 und ein Anzeigeelement 120 mit einem Erkennungsmerkmal 200 (siehe auch Figuren 2a und 2b, 3a und 3b sowie 4a und 4b).

Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung.

Das Anzeigeelement 120 mit dem Erkennungsmerkmal 200 dient zum Anzeigen einer Information, beispielsweise einer Information über eine Verriegelung durch das Verriegelungselement 110 oder auch einer anderen Information, beispielsweise eines Piktogramms oder eines Zeichens, etc.

In der ersten Verriegelungsstellung 111 des Verriegelungselements 110 ist das Erkennungsmerkmal 200 innerhalb eines ersten Sichtfelds 212 sichtbar. In der zweiten Verriegelungsstellung 112 des Verriegelungselements 110 ist das Erkennungsmerkmal 200 innerhalb eines zweiten Sichtfelds sichtbar, zum Beispiel mit einem Erkennungselement wie einem scanbaren Element, das innerhalb des zweiten Sichtfelds positioniert ist.

Das Erkennungsmerkmal 200 ist in beiden Verriegelungsstellungen 111, 112 des Verriegelungselements 110 nicht verdeckt und bleibt stets sichtbar, wie genauer unten zu den Figuren 2a und 2b, 3a und 3b sowie 4a und 4b dargestellt.

Eine beispielhafte Ausführung des Erkennungsmerkmals 200, das abhängig von der Verriegelungsstellung im ersten Sichtfeld oder im zweiten Sichtfeld sichtbar ist, ist in den Figuren 2a und 2b, 3a und 3b sowie 4a und 4b näher dargestellt und beschrieben.

Die Figuren 2a und 2b zeigen Darstellungen einer erfindungsgemäßen Sicherungsvorrichtung 100 gemäß einer Ausführungsform in der ersten Verriegelungsstellung 111, in der das Erkennungsmerkmal 200 im zweiten Sichtfeld 214, hier von oben, nicht erkennbar ist, und in der zweiten Verriegelungsstellung 112, in der das Erkennungsmerkmal 200 im zweiten Sichtfeld 214 erkennbar ist.

Hauptfokus dieses Ansatzes liegt in der Steuerung der Leserichtung eines scanbaren Elementes, hier das Anzeigeelement 120 mit dem Erkennungsmerkmal 200. Das Erkennungsmerkmal 200, zum Beispiel ein Code 201, ist in jeder Stellung der CPA bzw. des Verriegelungselements 110 sichtbar, aber in der ersten Verriegelungsstellung 111, wie in Figur 2a dargestellt, nur aus einem gewissen Winkel, um eine Scannung von oben zu verhindern.

Figur 2a zeigt die CPA bzw. das Verriegelungselement 110 im geöffneten Zustand von oben. Im geöffneten Zustand der CPA 110 ist das Erkennungsmerkmal, zum Beispiel eine Code 201, beispielsweise ein Data Matrix Code (DMC) von oben nicht lesbar. Figur 2b zeigt die geschlossene CPA bzw. das Verriegelungselement 110 in der zweiten Verriegelungsstellung 112. Im geschlossenen Zustand ist das Erkennungsmerkmal 200, beispielsweise der Code 201, z.B. der DMC, von oben lesbar, da die Leserichtung durch ein Verschieben geändert wurde. Die Scannung ist jetzt von verschiedenen Seiten möglich.

Die Sicherungsvorrichtung 100 in Figur 2a und Figur 2b entspricht der oben zu Figur 1 beschriebenen Sicherungsvorrichtung, wobei in Figur 2a und Figur 2b die Struktur dieser Sicherungsvorrichtung 100 näher dargestellt ist.

Wie bereits oben zu Figur 1 beschrieben, dient die Sicherungsvorrichtung 100 zur Sicherung einer Verriegelung eines Verriegelungselements 110. Die Sicherungsvorrichtung 100 umfasst ein Verriegelungselement 110 und ein Anzeigeelement 120 mit Erkennungsmerkmal 200, das abhängig von der Verriegelungsstellung innerhalb des ersten Sichtfelds 212 oder innerhalb des zweiten Sichtfelds 214 sichtbar ist.

Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung. In Figur 2a ist das Verriegelungselement 110 in der ersten Verriegelungsstellung 111 dargestellt, in Figur 2b in der zweiten Verriegelungsstellung 112.

Das Anzeigeelement 120 mit dem Erkennungsmerkmal 200 (siehe Figuren 2a und 2b) dient zum Anzeigen einer Information, beispielsweise einer Information über eine Verriegelung durch das Verriegelungselement 110. In den Figuren 2a und 2b ist das Erkennungsmerkmal als zweidimensionaler Code mit weißen und schwarzen Elementen bzw. Pixeln dargestellt. Der 2D-Code ist beispielsweise ein DMC.

Wie bereits oben zu Figur 1 beschrieben, ist das Erkennungsmerkmal 200 in der ersten Verriegelungsstellung 111 des Verriegelungselements 110 innerhalb eines ersten Sichtfelds 212 sichtbar. Bei einer Betrachtung des Erkennungsmerkmals 200 aus einem zweiten Sichtfeld 214 heraus, beispielsweise von oben, wie in Figur 2a dargestellt, ist das Erkennungsmerkmal 200 nicht erkennbar.

In der zweiten Verriegelungsstellung 112 des Verriegelungselements 110 dagegen ist das Erkennungsmerkmal 200 innerhalb des zweiten Sichtfelds 214 sichtbar. Bei einer Betrachtung des Erkennungsmerkmals 200 aus dem zweiten Sichtfeld 214 heraus, beispielsweise von oben, wie in Figur 2b dargestellt, ist das Erkennungsmerkmal 200 erkennbar.

Wichtig ist hier die Eigenschaft des Erkennungsmerkmals 200, dass es in beiden Verriegelungsstellungen 111, 112 des Verriegelungselements 110 nicht verdeckt ist und stets sichtbar bleibt.

Das erste Sichtfeld 212 und das zweite Sichtfeld 214 können unterschiedliche Sichtbereiche umfassen. In den Figuren 2a und 2b ist ein Blick aus dem zweiten Sichtfeld 214 heraus auf das Erkennungsmerkmal 200 dargestellt. Daher ist in Figur 2a nur ein Teil des Erkennungsmerkmals 200 erkennbar, das in diesem zweiten Sichtfeld 214 nicht scanbar bzw. erkennbar ist. Erst bei geschlossener CPA 110 bzw. wenn sich das Verriegelungselement 110 in der zweiten Verriegelungsstellung 112 befindet, ist in dem zweiten Sichtfeld das komplette Erkennungsmerkmal 200 erkennbar und scanbar. Die Information kann dann gelesen werden und es wird erkannt, dass die CPA 110 geschlossen ist.

Die Sicherungsvorrichtung 100 kann ein Manipulationselement 216 umfassen, das ausgebildet ist, beim Bewegen des Verriegelungselements 110 von der ersten Verriegelungsstellung 111 in die zweite Verriegelungsstellung 112 das erste Sichtfeld 212 in das zweite Sichtfeld 214 zu überführen.

Das Manipulationselement 216 kann, wie in den Figuren 2a und 2b dargestellt, ein keilförmiges Element sein, das sich in der ersten Verriegelungsstellung 111, wie in Figur 2a dargestellt von oben betrachtet zwischen das Erkennungsmerkmal 200 und den Betrachter schiebt, so dass der Betrachter innerhalb des zweiten Sichtfelds 214 das Erkennungsmerkmal 200 nicht mehr vollständig erkennen kann. Das Manipulationselement 216 erzeugt durch das Einschieben zwischen das Erkennungsmerkmal 200 und den Betrachter aber ein anderes Sichtfeld, nämlich das erste Sichtfeld 212, über welches das Erkennungsmerkmal 200 vollständig erkennbar ist. Bewegt sich der Betrachter also vom zweiten Sichtfeld 214 weg zum ersten Sichtfeld 212, so kann er das Erkennungsmerkmal 200 vollständig erkennen. Allerdings schaut er dann nicht mehr von oben auf das Erkennungsmerkmal 200 sondern blickt seitlich auf das Erkennungsmerkmal 200.

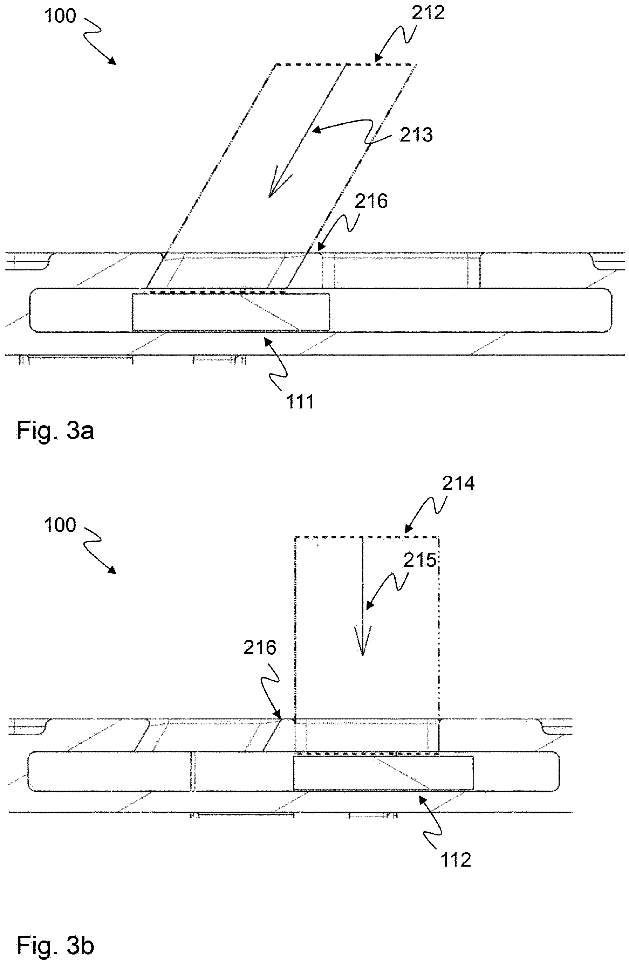

Das Manipulationselement 216 kann ausgebildet sein, beim Bewegen des Verriegelungselements 110 von der ersten Verriegelungsstellung 111 in die zweite Verriegelungsstellung 112 eine Leserichtung 213 zu verändern, in der das Erkennungsmerkmal 200 erkennbar ist, wie näher zu den Figuren 3a und 3b dargestellt. Wie oben beschrieben, muss der Betrachter dann seine Betrachtungsrichtung ändern, um in der neuen Leserichtung das Erkennungsmerkmal 200 erkennen zu können.

Das Erkennungsmerkmal 200 kann einen Code 201 umfassen, beispielsweise einen 2-dimensionalen Code wie einen QR-Code, Barcode oder DMC, der ausgebildet ist, die Information anzuzeigen.

Der Code 201 ist in der ersten Verriegelungsstellung 111 innerhalb des ersten Sichtfelds 212 erkennbar und ist in der zweiten Verriegelungsstellung 112 innerhalb des zweiten Sichtfelds 214 erkennbar.

Wie in dem Beispiel der Figuren 2a und 2b veranschaulicht, kann das Erkennungsmerkmal 200 bzw. der 2D-Code 201 einen Data Matrix Code, DMC 201 umfassen. Es kann sich beispielsweise auch um einen Barcode handeln.

Ein solcher Data Matrix Code besteht beispielsweise aus den folgenden Hauptkomponenten:
1) zwei Paare fester durchgehender und unterbrochener Kanten als Begrenzungslinien (Finder Pattern bzw. Positionsmarker). Die festen Begrenzungslinien dienen zur Abgrenzung. Sie werden für die Ausrichtung und Entzerrung des Data Matrix Codes verwendet, so dass jeder Lesewinkel möglich ist.
2) eine umlaufende Ruhezone (Quiet Zone). Diese leere Zone umgibt den Data Matrix Code. Sie enthält keinerlei Informationen oder Muster. Die Breite der Ruhezone beträgt mindestens eine Spalte bzw. eine Zeile (besser die vierfache Breite bzw. Höhe eines Moduls) und wird zur Abgrenzung von anderen optischen Bildelementen der Umgebung benötigt.
3) die den geschlossenen Kanten gegenüberliegende Ecke. Diese Ecke erlaubt das schnelle Erkennen der Codeschemata. Beim Codeschema ECC 200 mit einer geraden Anzahl Zeilen und Spalten ist das Element in der oberen rechten Ecke stets weiß. Bei den anderen genormten Codeschemata mit einer ungeraden Zeilen- und Spaltenzahl ist das Element in der oberen rechten Ecke stets schwarz.
4) die Ausrichtungsmuster (Alignment Pattern). Diese paarweise Kombination durchgehender und unterbrochener Linien in beiden Richtungen waagerecht und senkrecht erleichtern die Bildauswertung. Sie unterteilen große Datenfelder bei Codes mit mindestens 32 Modulen Kantenlänge in gleich große Teile.
5) der Datenbereich. Dieser Datenbereich enthält die eigentliche binäre Information in kodierter Form. Je nach Größe der Matrix definiert sich damit auch die Anzahl der möglichen Informationen.

Die Figuren 3a und 3b zeigen eine Darstellung einer weiteren Ausführungsform der Sicherungsvorrichtung 100 in der ersten Verriegelungsstellung 111, in der das Erkennungsmerkmal 200 im ersten Sichtfeld 212 erkennbar ist (Figur 3a) und in der zweiten Verriegelungsstellung 112, in der das Erkennungsmerkmal 200 im zweiten Sichtfeld 214 erkennbar ist (Figur 3b).

Die Figuren 3a und 3b zeigen das gleiche Prinzip, wie oben zu den Figuren 2a und 2b dargestellt, jedoch in seitlicher Schnittdarstellung, in der die beiden Sichtfelder 212, 214 schematisch dargestellt sind.

Wie bereits oben beschrieben, dient die Sicherungsvorrichtung 100 zur Sicherung einer Verriegelung eines Verriegelungselements 110. Die Sicherungsvorrichtung 100 umfasst ein Verriegelungselement 110 und ein Anzeigeelement 120 mit Erkennungsmerkmal 200, das abhängig von der Verriegelungsstellung innerhalb des ersten Sichtfelds 212 oder innerhalb des zweiten Sichtfelds 214 sichtbar ist.

Wie bereits oben zu den Figuren 2a und 2b beschrieben, ist das Erkennungsmerkmal 200 in der ersten Verriegelungsstellung 111 des Verriegelungselements 110 innerhalb eines ersten Sichtfelds 212 sichtbar (siehe Figur 3a). Bei einer Betrachtung des Erkennungsmerkmals 200 aus einem zweiten Sichtfeld 214 heraus ist das Erkennungsmerkmal 200 dagegen in der hier dargestellten ersten Verriegelungsstellung 111 nicht erkennbar.

In der zweiten Verriegelungsstellung 112 des Verriegelungselements 110 (siehe Figur 3b) dagegen ist das Erkennungsmerkmal 200 innerhalb des zweiten Sichtfelds 214 sichtbar. Bei einer Betrachtung des Erkennungsmerkmals 200 aus dem zweiten Sichtfeld 214 heraus, beispielsweise von oben, wie in Figur 3b dargestellt, ist das Erkennungsmerkmal 200 erkennbar.

Das Anzeigeelement 120 umfasst eine Anzeigeebene 220 und ist ausgebildet ist, das Erkennungsmerkmal 200 auf der Anzeigeebene 220 darzustellen.

Das Erkennungsmerkmal 200 ist in der ersten Verriegelungsstellung 111 innerhalb eines ersten Bereichs von Lesewinkeln bezüglich der Anzeigeebene 220 erkennbar. In Figur 3a ist ein erster Lesewinkel bzw. eine erste Leserichtung 213 dargestellt, innerhalb der das Erkennungsmerkmal 200 erkennbar ist. Es versteht sich, dass es sich hier nicht nur um einen einzigen Lesewinkel handelt, sondern um einen Bereich von unterschiedlichen, nahe beieinander liegenden Lesewinkeln und entsprechenden Leserichtungen.

Der erste Bereich von Lesewinkeln umfasst jedoch keinen rechten Winkel bezüglich der Anzeigeebene 220. D.h. das Erkennungsmerkmal 200 ist von oben aus, also in rechtem Winken zur Anzeigeebene 220, nicht erkennbar.

Das Erkennungsmerkmal 200 ist in der zweiten Verriegelungsstellung 112 innerhalb eines zweiten Bereichs von Lesewinkeln bezüglich der Anzeigeebene 220 erkennbar, wie in Figur 3b dargestellt. Der zweite Bereich von Lesewinkeln umfasst einen rechten Winkel bezüglich der Anzeigeebene 220, d.h. eine Leserichtung 215 von oben.

In Figur 3b ist ein zweiter Lesewinkel bzw. eine zweite Leserichtung 215 dargestellt, innerhalb der das Erkennungsmerkmal 200 erkennbar ist. Es versteht sich, dass es sich hier nicht nur um einen einzigen Lesewinkel handelt, sondern um einen Bereich von unterschiedlichen, nahe beieinander liegenden Lesewinkeln und entsprechenden Leserichtungen. Dieser Bereich umfasst einen rechten Winkel zur Anzeigeebene 220, d.h., das Erkennungsmerkmal 200 ist von oben aus erkennbar.

In einer Ausführungsform umfassen der erste Bereich von Lesewinkeln und der zweite Bereich von Lesewinkeln keine gemeinsamen Winkel. Es handelt sich also um disjunkte Bereiche. In einer alternativen Ausführungsform können sich der erste Bereich von Lesewinkeln und der zweite Bereich von Lesewinkeln teilweise überschneiden, wobei jedoch der rechte Winkel zur Anzeigeebene 220 nur innerhalb des zweiten Bereichs von Lesewinkeln auftritt.

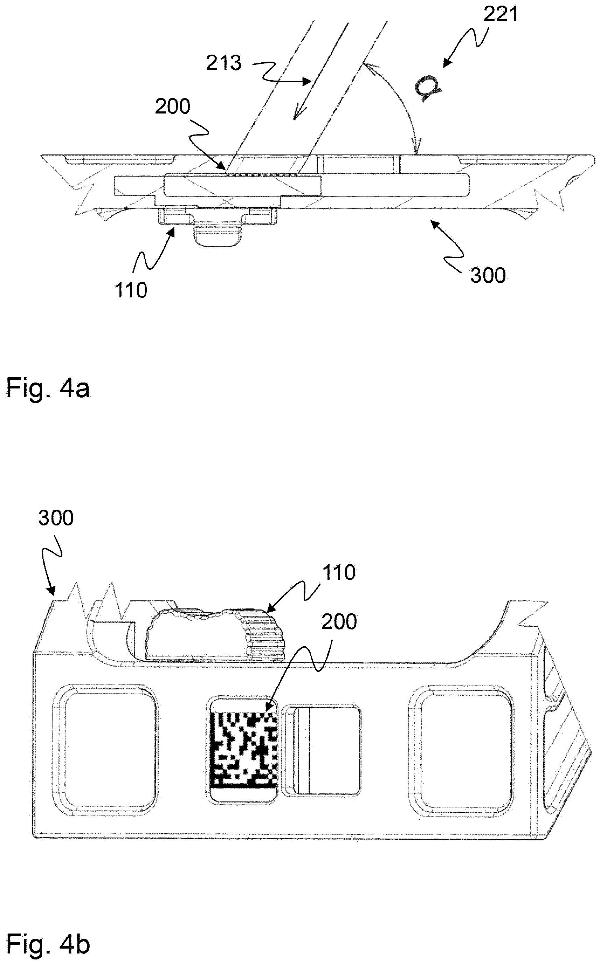

Die Figuren 4a und 4b zeigen eine Schnittdarstellung der erfindungsgemäßen Sicherungsvorrichtung 100 gemäß einer Ausführungsform in der ersten Verriegelungsstellung 111 mit einem Lesewinkel von etwa 70° (Fig. 4a) und eine räumliche Darstellung der erfindungsgemäßen Sicherungsvorrichtung 100 mit einem Blick auf das Erkennungsmerkmal parallel zur Leserichtung (Fig. 4b).

Die Sicherungsvorrichtung 100 entspricht den oben zu den Figuren 2a bis 3b beschriebenen Sicherungsvorrichtungen.

Wie bereits oben beschrieben, dient die Sicherungsvorrichtung 100 zur Sicherung einer Verriegelung eines Verriegelungselements 110. Die Sicherungsvorrichtung 100 umfasst ein Verriegelungselement 110 und ein Anzeigeelement 120 mit Erkennungsmerkmal 200, das abhängig von der Verriegelungsstellung innerhalb des ersten Sichtfelds 212 oder innerhalb des zweiten Sichtfelds 214 sichtbar ist.

In den Figuren 4a und 4b ist jeweils die geöffnete CPA 110 dargestellt, d.h. in der ersten Verriegelungsstellung 111. Nur innerhalb des ersten Sichtfelds 212, hier beispielsweise unter einem Lesewinkel von 70°, ist das Erkennungsmerkmal 200 erkennbar, nicht jedoch bei Betrachtung innerhalb des zweiten Sichtfelds 214, also beispielsweise von oben.

Schaut der Betrachter in der ersten Leserichtung 213 auf das Erkennungsmerkmal 200, so ist es für ihn nicht erkennbar, wie in Figur 4b dargestellt.

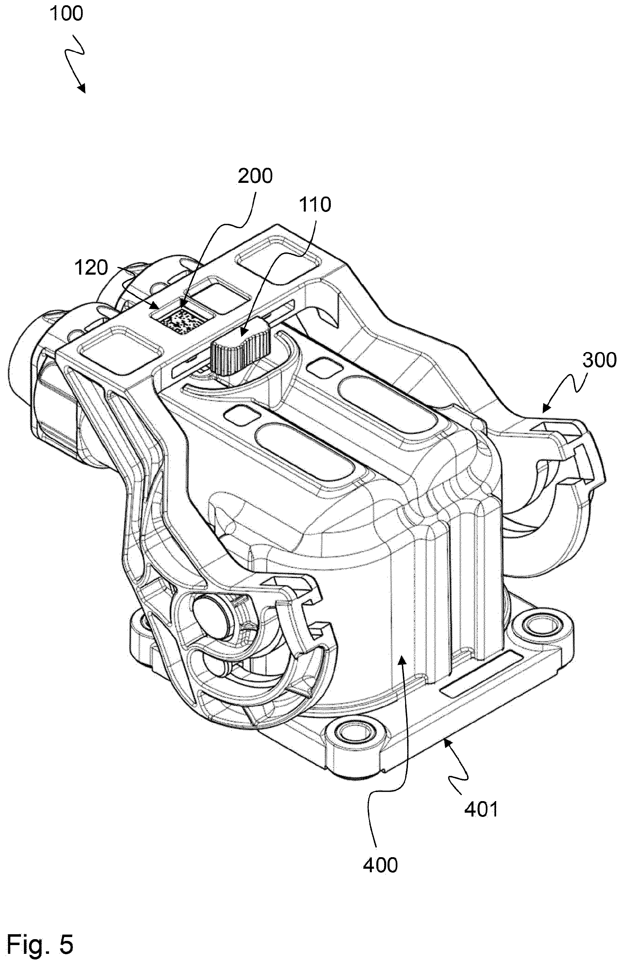

Die Fig. 5 zeigt eine 3D-Darstellung einer Sicherungsvorrichtung 100 umfassend ein Verriegelungselement 110, ein Anzeigeelement 120 mit Erkennungsmerkmal 200 und ein Spannelement 300 in geschlossener Spannbügelstellung, bei der sich das Verriegelungselement 110 in der zweiten Verriegelungsstellung 112 befindet.

Das Verriegelungselement 110 kann zwischen den beiden Verriegelungsstellungen 111, 112 bewegt werden.

Die Sicherungsvorrichtung 100 ist ausgebildet, eine Steckerpositions-Sicherung (CPA) zur Sicherung einer Verriegelung eines Steckergehäuses 400 an einem Gegen-Steckergehäuse 401, auch Schnittstelle genannt, vorzunehmen.

Die Sicherungsvorrichtung 100 umfasst neben den bereits oben beschriebenen Verriegelungselement 110 und Anzeigeelement 120 mit Erkennungsmerkmal 200 auch ein Spannelement 300, beispielsweise einen Spannbügel oder Bügel, zum Einspannen des Steckergehäuses 400 in das Gegen-Steckergehäuse 401.

Das Spannelement 300 ist von einer offenen Spannelementstellung, in der das Steckergehäuse 400 in das Gegen-Steckergehäuse 401 einführbar ist, in eine geschlossene Spannelementstellung, in der das Steckergehäuse 400 elektrisch kontaktierend mit dem Gegen-Steckergehäuse 401 fixiert ist, bewegbar.

Das Verriegelungselement 110 ist an dem Spannelement 300 angebracht, wie in Figur 5 dargestellt, zum Beispiel an einer Tafel oder einem Steg am Spannelement 300, wie in Figur 5 gezeigt, und ist ausgebildet, das Spannelement 300 zu verriegeln oder zu entriegeln.

Das Erkennungsmerkmal 200 des Anzeigeelements 120 zeigt eine Information an, beispielsweise eine Information über eine Verriegelung des Spannelements 300 durch das Verriegelungselement 110. Das Erkennungsmerkmal 200.

Das Verriegelungselement 110 ist in der geschlossenen Spannelementstellung von der ersten Verriegelungsstellung 111 in die zweite Verriegelungsstellung 112 bewegbar. Das Verriegelungselement 110 ist ausgebildet, in der zweiten Verriegelungsstellung 112 das Spannelement 300 in der geschlossenen Spannelementstellung zu verriegeln, und in der ersten Verriegelungsstellung 111 das Spannelement 300 für eine Bewegung in die offene Spannelementstellung zu entriegeln.

Das Anzeigeelement 120 mit dem Erkennungsmerkmal 200 ist an dem Spannelement 300 angebracht, zum Beispiel an einer Tafel am Spannelement 300, wie in Figur 5 dargestellt.

In der ersten Verriegelungsstellung 111 ist das Erkennungsmerkmal 200 innerhalb eines ersten Sichtfelds 212 sichtbar, wie oben zu den Figuren 2a bis 4b beschrieben. In der zweiten Verriegelungsstellung 112 ist das Erkennungsmerkmal 200 innerhalb eines zweiten Sichtfelds 214 sichtbar, wie oben zu den Figuren 2a bis 4b beschrieben.

Die Figur 5 zeigt somit auch eine Steckverbindung mit einem Steckergehäuse 400 und einem Gegen-Steckergehäuse 401, die über die Sicherungsvorrichtung 100 wie oben beschrieben miteinander verbunden und gesichert sind.

### BEZUGSZEICHENLISTE

- 100: Sicherungsvorrichtung
- 110: Verriegelungselement
- 111: erste Verriegelungsstellung (entriegelt)
- 112: zweite Verriegelungsstellung (verriegelt)
- 120: Anzeigeelement
- 200: Erkennungsmerkmal
- 201: Code
- 212: erstes Sichtfeld
- 213: Leserichtung
- 214: zweites Sichtfeld
- 220: Anzeigeebene
- 221: Lesewinkel
- 300: Spannelement bzw. Spannbügel
- 400: Steckergehäuse
- 401: Gegen-Steckergehäuse bzw. Schnittstelle

## Patentansprüche

1. Sicherungsvorrichtung (100) zur Sicherung einer Verriegelung eines Verriegelungselements (110), wobei die Sicherungsvorrichtung (100) Folgendes umfasst:
ein Verriegelungselement (110), das von einer ersten Verriegelungsstellung (111) in eine zweite Verriegelungsstellung (112) bewegbar ist, wobei das Verriegelungselement (110) in der zweiten Verriegelungsstellung (112) eine Verriegelung bewirkt;
ein Anzeigeelement (120) mit einem Erkennungsmerkmal (200) zum Anzeigen einer Information;
wobei in der ersten Verriegelungsstellung (111) des Verriegelungselements (110) das Erkennungsmerkmal (200) innerhalb eines ersten Sichtfelds (212) sichtbar ist; und
wobei in der zweiten Verriegelungsstellung (112) des Verriegelungselements (110) das Erkennungsmerkmal (200) innerhalb eines zweiten Sichtfelds (214) sichtbar ist.

2. Sicherungsvorrichtung (100) nach Anspruch 1,
wobei das Erkennungsmerkmal (200) in beiden Verriegelungsstellungen (111, 112) des Verriegelungselements (110) nicht verdeckt ist und stets sichtbar bleibt.

3. Sicherungsvorrichtung (100) nach Anspruch 1 oder 2,
wobei das erste Sichtfeld (212) und das zweite Sichtfeld (214) unterschiedliche Sichtbereiche umfassen.

4. Sicherungsvorrichtung (100) nach einem der vorstehenden Ansprüche, mit:
einem Manipulationselement (216), das ausgebildet ist, beim Bewegen des Verriegelungselements (110) von der ersten Verriegelungsstellung (111) in die zweite Verriegelungsstellung (112) das erste Sichtfeld (212) in das zweite Sichtfeld (214) zu überführen.

5. Sicherungsvorrichtung (100) nach Anspruch 4,
wobei das Manipulationselement (216) ausgebildet ist, beim Bewegen des Verriegelungselements (110) von der ersten Verriegelungsstellung (111) in die zweite Verriegelungsstellung (112) eine Leserichtung (213) zu verändern, in der das Erkennungsmerkmal (200) erkennbar ist.

6. Sicherungsvorrichtung (100) nach Anspruch 4 oder 5,
wobei das Anzeigeelement (120) eine Anzeigeebene (220) umfasst, und ausgebildet ist, das Erkennungsmerkmal (200) auf der Anzeigeebene (220) darzustellen;
wobei das Erkennungsmerkmal (200) in der ersten Verriegelungsstellung (111) innerhalb eines ersten Bereichs von Lesewinkeln bezüglich der Anzeigeebene (220) erkennbar ist;
wobei der erste Bereich von Lesewinkeln keinen rechten Winkel bezüglich der Anzeigeebene (220) umfasst.

7. Sicherungsvorrichtung (100) nach Anspruch 6,
wobei das Erkennungsmerkmal (200) in der zweiten Verriegelungsstellung (112) innerhalb eines zweiten Bereichs von Lesewinkeln bezüglich der Anzeigeebene (220) erkennbar ist;
wobei der zweite Bereich von Lesewinkeln einen rechten Winkel bezüglich der Anzeigeebene (220) umfasst.

8. Sicherungsvorrichtung (100) nach Anspruch 6 oder 7,
wobei der erste Bereich von Lesewinkeln und der zweite Bereich von Lesewinkeln keine gemeinsamen Winkel umfassen.

9. Sicherungsvorrichtung (100) nach einem der Ansprüche 4 bis 8,
wobei das Erkennungsmerkmal (200) einen Code (201) umfasst, der ausgebildet ist, die Information anzuzeigen;
wobei der Code (201) in der ersten Verriegelungsstellung (111) innerhalb des ersten Sichtfelds (212) erkennbar ist; und
wobei der Code (201) in der zweiten Verriegelungsstellung (112) innerhalb des zweiten Sichtfelds (214) erkennbar ist.

10. Sicherungsvorrichtung (100) nach einem der Ansprüche 4 bis 9,
wobei die Sicherungsvorrichtung (100) ausgebildet ist, eine Steckerpositions-Sicherung (CPA) zur Sicherung einer Verriegelung eines Steckergehäuses (400) an einem Gegen-Steckergehäuse (401) vorzunehmen.

11. Sicherungsvorrichtung (100) nach Anspruch 10, ferner umfassend:
ein Spannelement (300) zum Einspannen des Steckergehäuses (400) in das Gegen-Steckergehäuse (401), wobei das Spannelement (300) von einer offenen Spannelementstellung, in der das Steckergehäuse (400) in das Gegen-Steckergehäuse (401) einführbar ist, in eine geschlossene Spannelementstellung, in der das Steckergehäuse (400) elektrisch kontaktierend mit dem Gegen-Steckergehäuse (401) fixiert ist, bewegbar ist; und
wobei das Verriegelungselement (110) an dem Spannelement (300) angebracht ist und ausgebildet ist, das Spannelement (300) zu verriegeln oder zu entriegeln.

12. Sicherungsvorrichtung (100) nach Anspruch 11,
wobei das Verriegelungselement (110) in der geschlossenen Spannelementstellung von der ersten Verriegelungsstellung (111) in die zweite Verriegelungsstellung (112) bewegbar ist und ausgebildet ist, in der zweiten Verriegelungsstellung (112) das Spannelement (300) in der geschlossenen Spannelementstellung zu verriegeln, und in der ersten Verriegelungsstellung (111) das Spannelement (300) für eine Bewegung in die offene Spannelementstellung zu entriegeln.

13. Sicherungsvorrichtung (100) nach Anspruch 11 oder 12,
wobei das Anzeigeelement (200) und das Manipulationselement (216) an dem Spannelement (300) angebracht sind.
